# EUROPÄISCHE PATENTSCHRIFT

(11) **EP 0 572 356 B1**
(45) Veröffentlichungstag und Bekanntmachung des Hinweises auf die Patenterteilung: **04.12.1996**
(21) Anmeldenummer: 93810384.3
(22) Anmeldetag: 25.05.1993
(51) Int. Cl.: B01D 46/24, B01J 2/16, B01D 46/04, B01D 29/11, B01D 36/00

(54) **Vorrichtung und Verfahren zur Nassreinigung von Filterpatronen in Wirbelschichtapparaten, Strühtrocknern und Fliessbettanlagen**
Apparatus and process for cleaning with a liquid of filter cartridges in fluidised powder apparatus or in spray-dryers
Dispositif et procédé pour le nettoyage à l'aide d'un liquide de cartouches filtrantes dans des appareils à poudres fluidisées ou des pulvérisateurs-sécheurs

(30) Priorität: 26.05.1992 CH 1698/92; 21.01.1993 CH 176/93
(43) Veröffentlichungstag der Anmeldung: 01.12.1993
(73) Patentinhaber: NIRO-AEROMATIC AG, CH-4416 Bubendorf (CH)
(72) Erfinder: Frey, Urs, CH-4132 Muttenz (CH); Bonde, Mikael, CH-4057 Basel (CH); Bubendorf, François, F-68730 Ranspach-le-Bas (CH); Ris, Jürg, CH-4127 Birsfelden (CH); Eglin, Hugo, CH-4410 Liestal (CH)
(74) Vertreter: Ullrich, Gerhard, Dr.

(56) Entgegenhaltungen:
- DE-A- 1 951 105
- DE-A- 2 521 828
- DE-A- 3 537 138
- GB-A- 1 288 375
- US-A- 4 941 971
- US-A- 5 059 331

## Beschreibung

Die Erfindung bezieht sich auf eine Vorrichtung und ein Verfahren zum Waschen von Filtern, insbesondere von sterngefalteten Filterpatronen in Wirbelschichtapparaten und ähnlichen Prozessaggregaten, wie Sprühtrocknern und Fliessbettanlagen.

Zur Trocknung, Granulation und Einkapselung finden die obigen Aggregate heute eine breite Anwendung, in der Pharma- und Lebensmittelindustrie sowie zur Herstellung von Waschmitteln und anderen Chemieerzeugnissen. Zwecks vereinfachter Darstellung wird im weiteren nur auf Wirbelschichtapparate Bezug genommen.

Typischerweise besteht ein Wirbelschichtapparat aus der Wirbelkammer und einem anschliessenden Kopfteil, in welchem eine Anzahl Filter zur Abscheidung des wirbelfähigen Gutes aus dem Gasstrom - zumeist Luft - angeordnet ist. Es war üblich, als Filtermaterial Gewebe oder Filze aus Natur- oder Synthesefasern einzusetzen. Während des Produktionsprozesses lagert sich am Filter eine wachsende Schicht Produktstaub ab, was zu Druckverlusten und somit zu sinkender Abscheideleistung führt.

Um die Filter von dieser Ablagerung zu befreien, ist es bekannt, bei laufendem Betrieb das Filter mit dem Hauptgasstrom entgegengesetzten Druckimpulsen, vorzugsweise Pressluftstösse, zu beaufschlagen. Damit wird die Ablagerung von der Innenseite des Filters abgeblasen. Im Bestreben, die Ablagerung von Produktstaub von vornherein zu reduzieren und gleichzeitig die Feinheit der Filtration zu erhöhen, entwickelte man ein Filtermaterial, bestehend aus einem Stützvlies mit der aufgebrachten eigentlichen Filterschicht aus antiadhäsivem Polytetrafluorethylen. Auch bei den nunmehr effizienteren Filtermaterialien muss wiederholt ein gründlicheres Reinigen, über den Reinigungsgrad hinaus, der mittels Druckluftimpulse erreichbar ist, erfolgen. Eine derartige Grundreinigung auch des Filters ist bei Wechsel des Produktes, welches im Wirbelschichtapparat erzeugt wird, nötig, um keine Kontamination des Nachfolgeproduktes zu verursachen. Gleichfalls kann zyklisch - abhängig von der Dauer der Produktionsphase und der Produktart - eine gründliche Filterreinigung erforderlich werden, wenn das Filtermaterial bei längerem Betrieb, trotz periodischen Freiblasens, sukzessive von dem Produktstaub zugesetzt wird.

Für solche Art Grundreinigung der Filter von gasgetragenen, flüssigkeitslöslichen Partikeln sind bereits verschiedene Waschverfahren und -vorrichtungen entwickelt worden. Ein Herausnehmen der Filter aus dem Wirbelschichtapparat, Waschen der Filter ausserhalb der Anlage und anschliessendes Wiedereinbauen, ist wegen des hohen Montageaufwandes, der langen Stillstandszeit des Apparates und einer eventuellen Gefährdung des Personals bei gesundheitsriskanten Produkten, unvertretbar.

Aus der DE-OS 3316527 ist eine Waschvorrichtung bekannt, wo eine Spülflüssigkeitsleitung mit einer Vielzahl von Sprühdüsen innerhalb einer Kaskade von Filterschläuchen bewegt werden kann, um mit den Flüssigkeitsstrahlen die Filteroberfläche möglichst vollständig freizuspülen. Es werden dort zwei Varianten vorgeschlagen. Erstens das Abspritzen des Aeusseren der Filterschläuche und zweitens das Einfahren der Sprühdüsen in die Filterschläuche mit der Spülung von innen. Diese Vorrichtung ist für die in Wirbelschichtapparaten vorrangig eingesetzen Filterpatronen ungeeignet. Ein Spülvorgang, aus dem Inneren der Patrone nach aussen, scheitert bei der Verwendung von Polytetrafluorethylen als Filterschicht an ihrer Undurchlässigkeit bezüglich Flüssigkeiten. Eine Grundreinigung grosser Filterpatronen, insbesondere mit sterngefaltetem Filtermaterial, bleibt durch äusserliches Besprühen mittels der beschriebenen Konstruktion unzureichend. Von den Spühlstrahlen werden nicht alle Oberflächenabschnitte der Filterpatrone direkt betroffen.

Als Filtermaterial kommen je nach spezifischer Anwendung neben den verschiedenen Geweben, Filzen oder Geflechten aus Natur- oder Synthesefasern, aus auf einem Stützvlies aufgebrachter Schicht von antiadhäsivem Polytetrafluorethylen, auch mehrschichtige Stahlgeflechte zur Anwendung. Struktur und Festigkeit der unterschiedlichen Filtermaterialien erfordern und ermöglichen eine differenzierte Waschbehandlung.

Für die gründliche Reinigung von Filterpatronen im eingebauten Zustand wurde das Verfahren und die Vorrichtung gemäss der DE-PS 4029804 entwickelt. Bei dieser Ausführung wird die einzelne Filterpatrone am Kopfende, unterhalb der Abtrennung zum Reinraum des Wirbelschichtapparates mit einer Ringleitung umgeben, welche einen Kranz von Düsenbohrungen oder einen auf die Filteroberfläche senkrecht gerichteten Düsenspalt aufweist. Ueber diese Oeffnungen wird das Filter mit Waschflüssigkeit bestrahlt. Die das Filter hinunterlaufende Reinigungsflüssigkeit löst die daran anhaftende Schicht von Produktstaub auf und spült diesen ab. Während des Spülvorganges wird das Filter mit Druckgasimpulsen beaufschlagt, die aus dem Inneren des Filters nach aussen wirken, und so die Ablösung der an der Filteraussenhaut befindlichen Partikel fördern.

Die einwandfreie Nassreinigung von sterngefalteten Filtern ist in der Literatur als problematisch anerkannt. Bei extremen Reinheitserfordernissen, wie in der Pharmazie oder der Lebensmitteltechnik, ist der mit dem bisher bekannten Stand der Technik erzielte Reinigungsgrad ungenügend. Das hat zwei nachteilig wirkende Ursachen. Einerseits wird von dem intensiver reinigenden Reinigungsflüssigkeitsstrahl, mit entsprechendem Strahldruck, direkt nur eine schmale Bandfläche am Filterumfang getroffen, während die am Filter abwärts liegende, weitaus grössere Fläche, lediglich durch die abwärts fliessende Reinigungsflüssigkeit von dem anhaftenden Produktstaub eben nur weitgehend freigespült wird. Andererseits liegen die Waschdüsen selbst im Reaktionsraum des Wirbelschichtapparates. Dadurch werden sie von dem umherwirbelnden Produkt verunreinigt, partiell oder sogar gänzlich zugesetzt und verlieren somit ihre Funktionsfähigkeit. Dies verursacht Anlagenstillstand und Aufwand, die Düsenöffnungen wieder zu reinigen.

Die Aufgabe der Erfindung besteht darin, eine Nassreinigung für den vorstehend beschriebenen Zweck zu schaffen und dabei die bisher auftretenden Mängel zu beseitigen. Das heisst, bei möglichst geringem Konstruktionsaufwand einen hohen Reinigungsgrad, auch bezüglich flüssigkeitsunlöslicher Produkte durch direktes Abstrahlen der gesamten, von Partikeln zugesetzten Filteroberfläche mit Reinigungsflüssigkeit zu erreichen und gleichzeitig die Waschdüsen vor Verunreinigung bei laufendem Betrieb zu schützen. Hierbei ist die eingesetzte Reinigungsflüssigkeit effizient zu nutzen sowie eine den unterschiedlichen Erfordernissen und Gegebenheiten - auch hinsichtlich der verwendeten verschiedenen flüssigkeitsundurchlässigen bzw. flüssigkeitsdurchlässigen Filtermaterialien - adäquate Waschbehandlung vorzusehen. Die gesamte Waschbehandlung ist zu automatisieren, um eine konstant hohe Reinigungsqualität zu erzielen und wechselnde menschliche Einflüsse weitgehend auszuschalten. Als Prämissen gelten die strikten Gerätebauvorschriften aus der Pharmazie und Lebensmittelindustrie.

Der erforderliche hohe Reinheitsgrad und die gänzliche Vermeidung des Verstopfens der Waschdüsen, war mit dem bisherigen Konstruktionsprinzip von Filterwaschvorrichtungen nicht realisierbar.

Es war ein völlig neuer Weg zu beschreiten. Die erfindungsgemässe Vorrichtung ist im kennzeichnenden Teil des unabhängigen Patentanspruchs 1, das mittels der Vorrichtung praktizierbare Verfahren in der Kennzeichnung von Patentanspruch 12 definiert. Weitere Lösungsmerkmale sowie vorteilhafte Ausführungsformen ergeben sich aus den abhängigen Patentansprüchen.

Die mit der Erfindung geschaffene Nassreinigungsvorrichtung und das dazugehörige Verfahren gewährleisten, sogar bei flüssigkeitsunlöslichen Produkten, einen hohen Reinheitsgrad, da alle Bereiche der aktiven Filteroberfläche - auch bei Sternfaltung - direkt mit Reinigungsflüssigkeit bestrahlt werden, und die Waschdüsen bei laufendem Betrieb des Wirbelschichtapparates nicht mehr dem im Reaktionsraum umherwirbelnden Produkt ausgesetzt sind, wodurch diese von Verunreinigungen frei bleiben. Es wird eine den jeweiligen Reinheitserfordernissen entsprechende, vom "Verunreinigungsgrad" abhängige und an das verwendete Filtermaterial angepasste Waschbehandlung ermöglicht. Selbst in das Filtergewebe hineinreichende hartnäckige Verkrustungen werden bei sparsamem Einsatz von Reinigungsflüssigkeit sicher beseitigt. Durch den programmgesteuerten Ablauf der Waschbehandlung ist eine gleichbleibendhohe Gründlichkeit ohne den Einfluss subjektiver Faktoren gewährleistet. Das neuartige Konstruktionsprinzip erfüllt international geltende Normen des Gerätebaus, auch sensibelster Bereiche.

Es wird vorgeschlagen, kranzförmig angeordnete Waschdüsen, die die jeweilige Filterpatrone im Querschnitt umgeben, durch welche die Reinigungsflüssigkeit auf den Filtermantel üblicherweise gespritzt wird, ausserhalb des Reaktionsraumes, im gefilterten Abgasraum zu installieren, und mittels einer gleitenden Hubbewegung, die gesamte aktive Filteroberfläche durch den Strahlbereich des Düsenkranzes hindurchzufahren. Bei einem erweiterten Waschprogramm wird die Filterpatrone vorher mit Reinigungsflüssigkeit durchspült und im gefüllten Zustand mit Ultraschall - gegebenenfalls zusätzlich mit Pressluft - beaufschlagt. Ueber ein Bodenventil in der Filterpatrone kann die Reinigungsflüssigkeit abgelassen werden. Ein solches erweitertes Waschprogramm besteht aus dem Spülgang, der Vorwäsche, der Feinwäsche und der abschliessenden Nachbehandlung.

Für Filterpatronen mit Filtermaterialien höherer Festigkeit, das auch härterem Strahldruck standhält, sind die Düsenöffnungen derart gestaltet und angeordnet, dass die Reinigungsstrahlen tangential unter einem Winkel α auf den Filtermantel auftreffen und dadurch die drehbar aufgehangene Filterpatrone in Drehung versetzen. Mit einer Hubvorrichtung wird die Filterpatrone durch den Kranz von Düsenöffnungen hindurchgefahren. Drehung und gleichzeitiger Auf- und Abwärtshub der Filterpatrone sorgen für eine optimale Wirkung der auf den Filtermantel auftreffenden Reinigungsstrahlen. Die Abdichtung zwischen dem Kopf des Reaktionsraumes und dem Abgasraum des Apparates während der Produktionsphase geschieht durch die in diesem Uebergang, an ihrem oberen Rand eingehängte Filterpatrone mit der zwischenliegenden Lippendichtung.

Die Erfindung wird im weiteren detailliert, in einer bevorzugten Ausführungsform, anhand der beigefügten schematischen Zeichnungen näher erläutert. Dabei zeigen :
- Fig. 1: die Prinzipdarstellung der Waschvorrichtung;
- Fig. 2: die Abdichtstelle zwischen Reaktionsraum und Abgasseite und
- Fig. 3: das Strömungsbild aus dem Kranz von Düsenöffnungen.

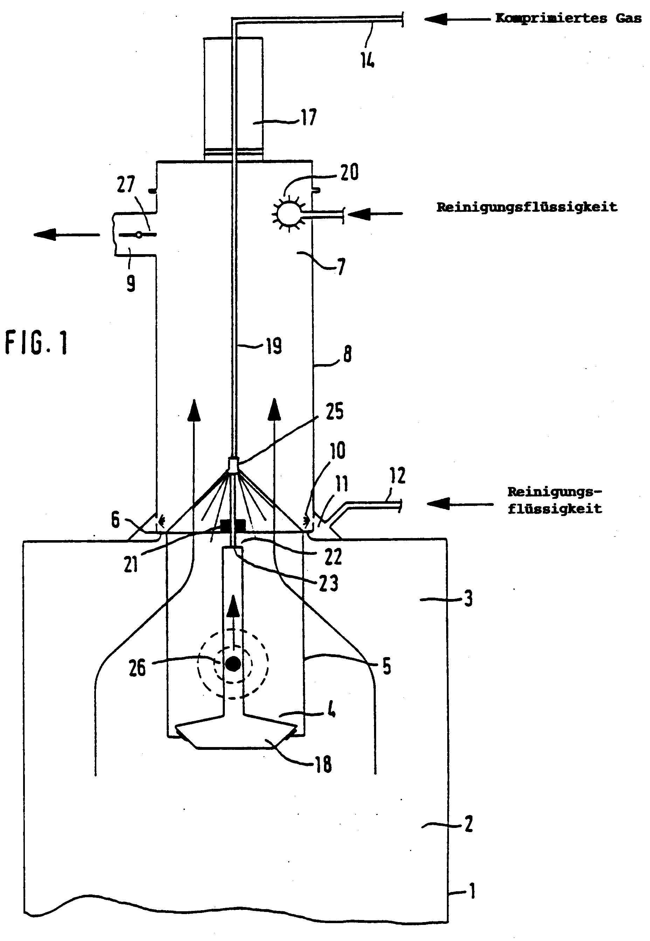

Bei der folgenden Beschreibung (Fig. 1) wird zunächst nur auf eine Filterpatrone im Wirbelschichtapparat Bezug genommen; tatsächlich sind jedoch zumeist mehrere derartige Filterpatronen darin angeordnet. Der hier relevante Teil des Wirbelschichtapparates mit der integrierten Waschvorrichtung besteht aus einem Apparategehäuse 1, dem Reaktionsraum 2 mit dem Reaktionsraum-Kopf 3 und der darin angeordneten Filterpatrone 4, die axial der Filtermantel 5 umgibt. Filterpatronen 4 und Filtermantel 5 können unterschiedliche geometrische Gestalt besitzen. Häufig benutzt wird eine Sternfaltung wegen der damit erzielten vergrösserten, aktiven Filteroberfläche. Bei grosser Beanspruchung wird ein Stahlfiltergewebe wegen dessen höherer Festigkeit bevorzugt.

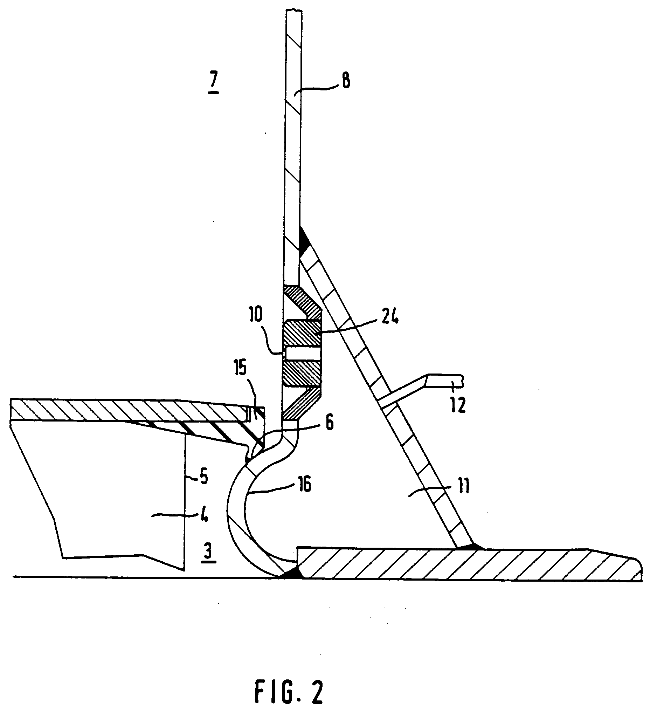

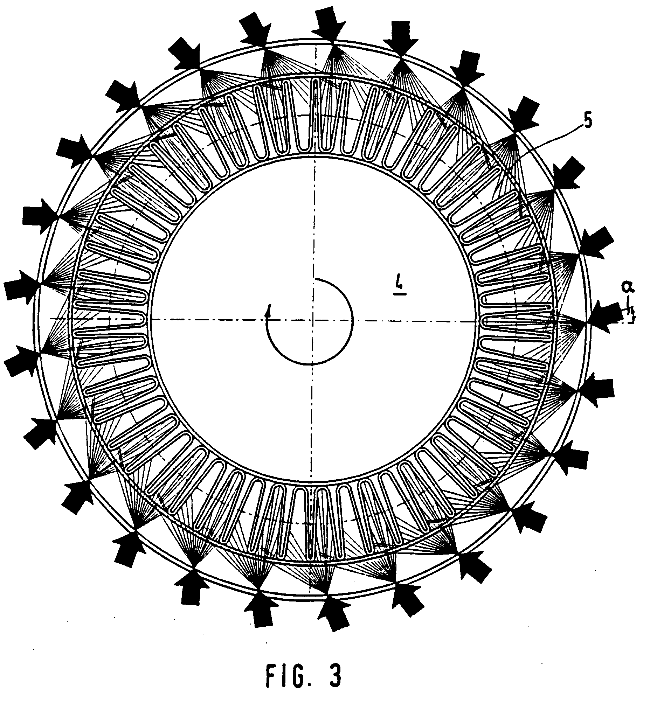

Der Reaktionsraum-Kopf 3 und der darüber befindliche Abgasraum 7 werden durch eine in diesem Uebergang befindliche Abdichtstelle 6 hermetisch voneinander getrennt. Den Abgasraum umgibt die Wandung 8, die den Gasaustritt 9 aufweist. Im Gasaustritt 9 ist eine Absperrklappe 27 angeordnet. Die Abdichtstelle 6 wird dadurch gebildet (s. Fig. 2), dass die in vorerwähntem Uebergang an ihrem oberen Rand eingehängte Filterpatrone 4 von einer Lippendichtung 15 umgeben ist, die auf einem Halbbogen 16, als Verlängerung der Wandung 8, aufliegt. Unmittelbar über der Abdichtstelle 6 - bereits in den Abgasraum 7 hineingerichtet und in der Wandung 8 angeordnet - befindet sich ein Kranz von Düsenöffnungen 10, der der Querschnittsgeometrie der Filterpatrone 4 angepasst ist und ein Hindurchfahren der Filterpatrone 4 durch diesen Kranz erlaubt. Die Düsenöffnungen 10 sind die Strömungsausgänge von in symmetrischer Verteilung angeordneten Flachstrahldüsen 24. Die Düsenöffnungen 10 sind derart beschaffen und angeordnet, dass die austretenden Strahlen der Reinigungsflüssigkeit tangential unter einem Neigungswinkel α (s. Fig. 3) rotationswirkend auf den Filtermantel 5 gerichtet sind. Versorgt werden die Flachstrahldüsen 24 über einen Ringkanal 11 und eine Zuführleitung 12 als Verteilsystem für die Reinigungsflüssigkeit.

Die Düsenöffnungen 10 können auch als radialer Spalt ausgebildet sein oder aus einer Vielzahl von zentrisch ausgerichteten Bohrungen bestehen. Der daraus austretende Strahl von Reinigungsflüssigkeit versetzt die Filterpatrone 4 normalerweise nicht in Drehung. Eine derartige Anordnung wäre zureichend für die Waschbehandlung von empfindlichem Filtermaterial, wo mit einem weicheren Strahl von Reinigungsflüssigkeit gearbeitet werden muss, der auch als tangential auftreffender Strahl nicht ausreichen würde, die Filterpatrone 4 in Drehung zu versetzen.

An ihrem Boden weist die Filterpatrone 4 ein Bodenventil 18 auf, das über ein Gestänge 19 mit einer Hubvorrichtung 17 verbunden ist. Die Durchführung des Gestänges 19 von der Hubvorrichtung 17 in die Filterpatrone 4 hinein zum Bodenventil 18 geschieht mittels einer auf der Deckfläche der Filterpatrone 4 sitzenden Buchse 21. Unterhalb der Buchse 21 - innerhalb der Filterpatrone 4 - weist das Gestänge 19 einen Mitnehmerabsatz 22 auf, welcher zugleich als Lagerung 23 für die Drehbewegung der Filterpatrone 4 ausgebildet ist. Der Abstand zwischen dem Mitnehmerabsatz 22 und der als Anschlag wirkenden Buchse 21 bestimmt sich nach dem Maximalhub des Bodenventils 18. In Wirkungsnähe zur Filterpatrone 4 ist ein Ultraschallgeber 26 - hier auf dem Gestänge 19 sitzend - plaziert.

Für die Beaufschlagung der Filterpatrone 4 mit komprimiertem Gas - mit Druckgasimpulsen - verläuft parallel zum Gestänge 19 eine Zuleitung 14, die in einem über der Filterpatrone 4 befindlichen Druckgasaustritt 25 mündet. Im Kopf des Abgasraumes 7 ist eine Spüldüse 20 zum Zweck der Spülung des Abgasraumes 7, der Schnellfüllung der Filterpatrone 4 mit Reinigungsflüssigkeit sowie zur Gesamtspülung des Wirbelschichtapparates vorgesehen.

Es folgt die Beschreibung des Betriebsablaufes. Dabei stellt das erläuterte Waschprogramm eine Maximalvariante für besonders hohe Reinheitsanforderungen und stark belastete Filterpatronen 4 dar. Bei einfacheren Bedingungen kommt man entsprechend den Umständen auch mit einem reduzierten Waschprogramm aus. In der Produktionsphase (s. Fig. 1), in welcher wirbelfähiges Gut behandelt wird, befindet sich die Filterpatrone 4 in Ihrer untersten Position und wird dabei auf die Abdichtstelle 6 gepresst (Zustand gem. Fig. 2). Weder über die Spüldüse 20 noch über die Düsenöffnungen 10 wird Reinigungsflüssigkeit eingeleitet; die Filterpatrone 4 wird nicht mit Druckgasimpulsen beaufschlagt, der Ultraschallgeber 26 ist inaktiv und das Bodenventil 18 ist geschlossen. Die Absperrklappe 27 im Gasaustritt 9 ist offen.

Der in den Kopf des Reaktionsraumes 3 fliessende Gasstrom durchdringt den Filtermantel 5 und verlässt die Filterpatrone 4 in Richtung des Abgasraumes 7 hin zum Gasaustritt 9. Beim Durchdringen des Filtermantels 5 wird das Produkt abgeschieden, setzt diesen jedoch sukzessive zu. Mit Druckgasimpulsen über die Zuleitung 14 und den Druckgasaustritt 25 wird der Filtermantel 5 vom Innern der Filterpatrone 4 periodisch bzw. in Abhängigkeit eines gemessenen Differenzdrucksignals grob freigeblasen.

Dadurch, dass die Düsenöffnungen 10 völlig ausserhalb des Reaktionsraumes 2, abgeschottet durch die Dichtstelle 6, angeordnet sind, bleiben die Düsenöffnungen 10 frei von jeglichen Spuren des Produktes. Insbesondere ist die Gefahr behoben, dass Düsenöffnungen 10 verstopft werden können.

Macht sich eine Grundreinigung der Filterpatrone 4 wegen Produktwechsels oder infolge fortschreitender Verkrustung des Filtermantels 5 - was mit Druckgasimpulsen nicht mehr auflösbar ist - erforderlich, wird auf den Waschzyklus umgeschaltet.

Der in Richtung des Reaktionsraum-Kopfes 3 fliessende Gas/Produktstrom wird unterbrochen und das Produkt aus dem Wirbelschichtapparat entleert. Vor der ersten eigentlichen Waschphase wird ein Spülgang durchgeführt. Hierzu erfolgt die Einleitung von Reinigungsflüssigkeit, z.B. normalem Leitungswasser, über die Spüldüse 20 und/oder über die Düsenöffnungen 10, wobei das Bodenventil 18 in der Null-Stellung - also geschlossen - verbleibt und sich die Filterpatrone 4 weiterhin in ihrer untersten Position, aufsitzend in der Abdichtstelle 6 (s. Fig. 2) befindet. Die Reinigungsflüssigkeit läuft von oben in die Filterpatrone 4 hinein und durchspült vom Innern her den Filtermantel 5. Bei stark eingestelltem Zufluss von Reinigungsflüssigkeit füllt sich die Filterpatrone 4, da der Abfluss durch den feinmaschigen Filtermantel 5 nicht in gleichem Masse erfolgt. Ist der Soll-Füllstand erreicht, wird der Ultraschallgeber 26 aktiviert. Mittels Ultraschall werden die hartnäckigen Verkrustungen am Filtermantel 5, die sich in das Filtergewebe hineinziehen können, aufgelöst. Bereits während der Beaufschlagung mit Ultraschall und/oder sogleich im Anschluss daran wird die Absperrklappe 27 im Gasaustritt 9 geschlossen und über die Zuleitung 14 sowie den Druckgasaustritt 25 auf die Filterpatrone 4, d.h. auf die jetzt darin befindliche Reinigungsflüssigkeit, ein einstellbarer Gasdruck gegeben. Somit ist ein verstärkter Spüleffekt durch den Filtermantel 5 vom Innern der Filterpatrone 4 nach aussen erzielbar. Ueber einen nicht dargestellten Auslass kann die produktbelastete Reinigungsflüssigkeit den Wirbelschichtapparat verlassen. Den Beanspruchungen der Ultraschallbehandlung entsprechend, muss das Filtergewebe eine bestimmte Mindestfestigkeit aufweisen; vorzugsweise werden Stahlfiltergewebe zum Einsatz kommen.

Nun geht der Spülgang in die Vorwaschphase über. Der bisher eventuell aktivierte Ultraschallgeber 26 wird abgeschaltet. Die Beaufschlagung mit Druckgasimpulsen kann bei Bedarf fortgesetzt werden. Jetzt wird die Hubvorrichtung 17 in Aufwärtsrichtung betätigt, die unter Vorspannung in Abwärtsrichtung stand. Diese Vorspannung über das Gestänge 19 bewirkte ein Anpressen des Bodenventils 18 am Sitz der Filterpatrone 4 und gleichzeitig durch die an letzter angreifende Zugkraft nach unten, ein Anpressen der Lippendichtung 15 auf den Halbbogen 16, wodurch die Abdichtstelle 6 sicher verschlossen blieb. Das Gestänge 19 fährt sukzessive nach oben, das Bodenventil 18 wird angehoben und gibt den Sitz frei. Somit kann die restliche, noch in der Filterpatrone 4 vom Spülgang verbliebene Reinigungsflüssigkeit, herauslaufen. Das Gestänge 19 fährt weiter nach oben; der Mitnehmerabsatz 22 schlägt an die Buchse 21 an, wodurch die Filterpatrone 4 nun kontinuierlich bis in eine Endlage nach oben, durch den Kranz von Düsenöffnungen 10 hindurch, gefahren wird. Diese obere Endlage ist so gewählt, dass auch die unterste Randzone des Filtermantels 5 von den Reinigungsstrahlen aus den Düsenöffnungen 10 erfasst wird. Während des Anhebens der Filterpatrone 4 werden die Flachstrahldüsen 24 über die Zuführleitung 12 und den Ringkanal 11 mit Reinigungsflüssigkeit beaufschlagt. Durch den Neigungswinkel α, unter dem die Düsenöffnungen 10 auf den Filtermantel 5 gerichtet sind, treffen die austretenden Reinigungsstrahlen tangential auf den Filtermantel 5 und versetzen die Filterpatrone 4 in Drehung, die an einer Lagerung 23 drehbar aufgehangen ist, wobei sich die Lagerung 23 im Bereich des Mitnehmerabsatzes 22 am Gestänge 19 befindet. Die Filterpatrone 4 führt nun gleichzeitig eine aufwärtsgehende Hubbewegung sowie eine Drehbewegung aus. Dadurch werden alle Zonen des Filtermantels 5 intensiv und effizient mit Reinigungsflüssigkeit bestrahlt. Mit Erreichen der oberen Endlage kehrt sich die Hubbewegung der Filterpatrone 4, so dass der Waschvorgang im Abwärtshub fortgesetzt wird. Vor dem Abwärtshub könnte man jedoch auch wegen der geöffneten Stellung - offen sind die Abdichtstelle 6 sowie der Sitz des Bodenventils 18 - zweckmässigerweise andere Teile des Wirbelschichtapparates waschen. Nach dem Abwärtshub ist die Vorwäsche beendet und der überwiegende Teil der Produktpartikel herausgewaschen.

Nach Spülgang und Vorwaschphase folgt die Feinwaschphase. Da nur mehr ein äusserst geringer Teil von noch verbliebenen Produktpartikeln herauszuwaschen ist, kann während der Feinwaschphase die Reinigungsflüssigkeit wiederholt - im Kreislauf - verwendet werden. Einleiten kann man die Feinwaschphase mit einem erneuten Fluten der Filterpatrone 4, die sich dabei in ihrer untersten Position befindet, d.h. die Abdichtstelle 6 sowie das Bodenventil 18 sind geschlossen. Das Verfahren entspricht dem vorbeschriebenen Spülgang, einschliesslich der möglichen zusätzlichen Beaufschlagung mit Ultraschall und Druckgasimpulsen. Die Filterpatrone 4 und das Apparateinnere werden dadurch nochmals gründlich ausgespült. Nach dem eventuellen Fluten wird die Hubvorrichtung 17 wieder eingeschaltet, um den gesamten Filtermantel 5 während mehrerer Auf- und Abwärtshübe durch den Kranz von aus den Düsenöffnungen 10 herausspritzenden Reinigungsstrahlen zu fahren. Die Zeitdauer dieser Behandlungsphase ist vom Grad des Reinheitserfordernisses abhängig.

Der Feinwaschphase kann bei besonders hohen Reinheitserfordernissen eine Nachbehandlung angeschlossen werden. Dazu wird ein erneuter Spülgang und eine sich anschliessende Feinwaschphase mit demineralisiertem Wasser durchgeführt. Schliesslich erfolgt ein Ausblasen der Düsenöffnungen 10 sowie der Spüldüse 20 mittels Druckluft. Zuletzt, vor Aufnahme einer erneuten Produktionsphase, wird das Apparateinnere - z.B. mit Warmluft - gründlich getrocknet.

Vor Anlauf der nächsten Produktionsphase muss die Filterpatrone 4 sich in ihrer Ausgangslage, der untersten Position, befinden. Das Bodenventil 18 - wieder in der Null-Stellung - ist geschlossen und erhält von der Hubvorrichtung 17 über das Gestänge 19 zur sicheren Abdichtung eine Andruckkraft, wodurch auch die Dichtstelle 6 hermetisch abgedichtet ist. Die Spüldüse 20, die Düsenöffnungen 10 sowie der Ultraschallgeber 26 sind inaktiv. Die Absperrklappe 27 ist offen, der nicht dargestellte Auslass für die Reinigungsflüssigkeit im Wirbelschichtapparat hingegen geschlossen.

In der Regel sind mehrere Filterpatronen 4 in einem Wirbelschichtapparat untergebracht; die Betriebssysteme der Waschvorrichtung sind dann entsprechend mehrfach vorhanden und die Reinigungsabläufe an allen Filterpatronen 4 koordiniert, z.B. derart, dass der Reinigungszyklus an jeweils zwei Filterpatronen 4 simultan abläuft und nach Zyklusende auf ein nächstes Paar von Filterpatronen 4 umgeschaltet wird.

## Patentansprüche

1. Vorrichtung zur Nassreinigung von Filterpatronen (**4**) von haftengebliebenen Partikeln in Prozessaggregaten - d.h. Wirbelschichtapparaten, Sprühtrocknern, Fliessbettanlagen und daraus kombinierten, hybriden Aggregaten - durch Behandlung mit Reinigungsflüssigkeit, wobei
a) die Reinigungsflüssigkeit von einem innerhalb des Prozessaggregates angeordneten und der Querschnittsgeometrie der Filterpatrone (**4**) angepassten Kranz von Düsenöffnungen (**10**) auf den Filtermantel (**5**) der Filterpatrone (**4**) spritzbar ist und
b) ein Prozessaggregat einen Reaktionsraum (**2**) mit einem Reaktionsraum-Kopf (**3**) aufweist, oberhalb dessen ein Abgasraum (**7**) vorgesehen ist und
c) der Abgasraum (**7**) den Reaktionsraum (**2**) mit einem Gasaustritt (**9**) verbindet und
d) Stellglieder zur Steuerung der Stoffströme vorhanden sind, **dadurch gekennzeichnet**, dass
e) am Gestänge (**19**) einer Hubvorrichtung (**17**) die Filterpatrone (**4**) so aufgehangen ist, dass die Filterpatrone (**4**) von einer untersten Position in eine oberste Position, nämlich zwischen dem Reaktionsraum-Kopf (**3**) und dem Abgasraum (**7**), auf- und abwärts bewegbar ist und
f) die Filterpatrone (**4**) in der untersten Position über eine Dichtstelle (**6**) den Reaktionsraum-Kopf (**3**) gegenüber dem Abgasraum (**7**) hermetisch abdichtet und somit
g) Gas aus dem Reaktionsraum (**2**) nur durch den Filtermantel (**5**) hindurch in den Abgasraum (**7**) gelangen kann und
h) Düsenöffnungen (**10**) im Abgasraum (**7**) vorgesehen sind, durch welche die Reinigungsflüssigkeit während der Auf- und Abwärtsbewegung der Filterpatrone (**4**) auf den Filtermantel (**5**) spritzbar ist und
i) in der Filterpatrone (**4**) ein Bodenventil (**18**) angeordnet ist, über das Reinigungsflüssigkeit abgelassen werden kann.

2. Vorrichtung nach Anspruch 1, **dadurch gekennzeichnet**, dass der Kranz von Düsenöffnungen (**10**) gebildet wird
a) von zentrisch auf die Filterpatrone (**4**) gerichteten Durchlassbohrungen oder als ein radial verlaufender Düsenspalt oder
b) aus einer Vielzahl von Düsenöffnungen (**10**), vorzugsweise Flachstrahldüsen (**24**), welche mit einem Neigungswinkel (α) auf den Filtermantel (**5**) gerichtet sind, so dass die herausspritzenden Reinigungsstrahlen unter dem Neigungswinkel (α) tangential auf den Filtermantel (**5**) auftreffen, auf die Filterpatrone (**4**) einen Drehimpuls ausüben und eine drehbar aufgehangene Filterpatrone (**4**) in Rotation versetzen können.

3. Vorrichtung nach Anspruch 1, **dadurch gekennzeichnet**, dass
a) die Dichtstelle (**6**) im Übergang vom Reaktionsraum-Kopf (**3**) zum Abgasraum (**7**) aus einer am oberen Rand der Filterpatrone (**4**) angeordneten Lippendichtung (**15**) und einem in einer Wandung (**8**) des Gehäuses (**1**) des Prozessaggregats angeordneten, zur Filterpatrone (**4**) hingewandten Halbbogen (**16**) gebildet wird, wobei
b) die Lippendichtung (**15**) in der untersten Position der Filterpatrone (**4**) auf den Halbbogen (**16**) dichtend aufsetzt.

4. Vorrichtung nach Anspruch 1, **dadurch gekennzeichnet**, dass mit der von der Hubvorrichtung (**17**) ausgeführten Auf- und Abwärtsbewegung der Filterpatrone (**4**) die Betätigung - Öffnung und Schliessung - des Bodenventils (**18**) gekoppelt ist.

5. Vorrichtung nach Anspruch 1, **dadurch gekennzeichnet**, dass
a) am Gestänge (**19**), welches durch eine auf der Filterpatrone (**4**) sitzende Buchse (**21**) hindurchgeht, unterhalb dieser Buchse (**21**) - entsprechend dem Hub des Bodenventils (**18**) - ein das Gestänge (**19**) verdickender Mitnehmerabsatz (**22**) vorgesehen ist und somit
b) beim Aufwärtshub des Gestänges (**19**) zunächst das Bodenventil (**18**) geöffnet und ab dem Anschlag des Mitnehmerabsatzes (**22**) an die Buchse (**21**), die Filterpatrone (**4**) angehoben wird.

6. Vorrichtung nach Anspruch 1 und 3, **dadurch gekennzeichnet**, dass mittels der Hubvorrichtung (**17**) über das Gestänge (**19**) eine nach unten, auf das Bodenventil (**18**) wirkende Druckkraft ausgeübt wird, um ein sicher verschliessendes Anpressen des Bodenventils (**18**) am Sitz in der Filterpatrone (**4**) und der Lippendichtung (**15**) auf dem Halbbogen (**16**) während der Produktionsphase und des Spülganges zu erreichen.

7. Vorrichtung nach Anspruch 2, **dadurch gekennzeichnet**, dass die drehbare Aufhängung der Filterpatrone (**4**) am Gestänge (**19**) der Hubvorrichtung (**17**), vorzugsweise im Bereich des Mitnehmerabsatzes (**22**) mittels einer Lagerung (**23**), vorgesehen ist.

8. Vorrichtung nach Anspruch 1, **dadurch gekennzeichnet**, dass im Kopf des Abgasraumes (**7**) eine Spüldüse (**20**) zur Spülung des Abgasraums (**7**) bzw. zur Schnellfüllung der Filterpatrone (**4**) mit Reinigungsflüssigkeit angeordnet ist.

9. Vorrichtung nach Anspruch 1, **dadurch gekennzeichnet**, dass sich im vom Abgasraum (**7**) abgehenden Gasaustritt (**9**) eine Absperrklappe (**27**) befindet, die zum Verschliessen während einer Druckgasbeaufschlagung vorgesehen ist.

10. Vorrichtung nach Anspruch 1, **dadurch gekennzeichnet**, dass sich in, an oder in der Wirkungsnähe der Filterpatrone (**4**) ein Ultraschallgeber (**26**) befindet.

11. Vorrichtung nach den Ansprüchen 1 bis 10, **dadurch gekennzeichnet**, dass in einem Prozessaggregat mit mehreren Filterpatronen (**4**) die Betriebssysteme der Nassreinigungsvorrichtung entsprechend mehrfach vorhanden sind, einschliesslich der zugehörigen Zu- und Ableitungen für die Stoffströme.

12. Verfahren zur Nassreinigung der Filterpatronen (**4**) unter Benutzung der Vorrichtung gemäss einem der Ansprüche 1 bis 11, **dadurch gekennzeichnet**, dass
a) während einer Waschphase durch Betätigung der Hubvorrichtung (**17**) die geleerte Filterpatrone (**4**) mit der gesamten Fläche des Filtermantels (**5**) eine oder mehrere auf- und abwärtsgehende Hubbewegungen, von der untersten Position in die oberste Position und umgekehrt, durch den ausserhalb des Reaktionsraumes (**2**), im Abgasraum (**7**) des Prozessaggregrats liegenden Kranz von Düsenöffnungen (**10**) hindurch, ausführt und
b) zugleich die Düsenöffnungen (**10**) aktiviert sind, wodurch der Filtermantel (**5**) von den auftreffenden Reinigungsstrahlen behandelt wird und
c) falls die Düsenöffnungen (**10**) im Neigungswinkel (α) ausgerichtet sind und die Filterpatrone (**4**) drehbar aufgehangen ist, dann durch die mit dem Neigungswinkel (α) tangential auf den Filtermantel (**5**) auftreffenden Reinigungsstrahlen die Filterpatrone (**4**) in Rotation versetzt wird und
d) die Filterpatrone (**4**) zusätzlich mit Druckimpulsen beaufschlagt werden kann.

13. Verfahren nach Anspruch 12, **dadurch gekennzeichnet**, dass
a) vor der Waschphase, beginnend mit einem Spülgang, die Filterpatrone (**4**) durch Einleitung von Reinigungsflüssigkeit über die Spüldüse (**20**) und/oder die Düsenöffnungen (**10**) geflutet wird, wobei die mit Reinigungsflüssigkeit gefüllte Filterpatrone (**4**) zusätzlich mit Ultraschall und/oder Druckimpulsen beaufschlagt werden kann, wodurch ein Durchspülen von Teilen des Wirbelschichtapparates sowie des Filtermantels (**5**) vom Innern der Filterpatrone (**4**) heraus erfolgt;
b) nach der Waschphase, in einer sich anschliessenden Feinwaschphase, der Spülgang und der Ablauf der Waschphase mit im Kreislauf geführter, oftmals benutzter Reinigungsflüssigkeit wiederholt wird und
c) abschliessend eine Nachbehandlung erfolgt, bestehend aus einem Spül- und Waschgang mit demineralisiertem Wasser für besonders hohe Reinheitserfordernisse, dem Ausblasen der Düsenöffnungen (**10**) sowie der Spüldüse (**20**) mittels Druckluft und dem Trocknen des gesamten Apparateinnern.

14. Verfahren nach Anspruch 12, **dadurch gekennzeichnet**, dass innerhalb der Waschphase nach dem ersten Aufwärtshub der Filterpatrone (**4**) übrige Innenzonen des Wirbelschichtapparates gewaschen werden.

15. Verfahren nach Anspruch 12 oder 13, **dadurch gekennzeichnet**, dass die Druckimpulse auf die Filterpatrone (**4**) mittels eines einstellbaren Gasdruckes erzeugt werden, um ein Durchdringen der Reinigungsflüssigkeit durch den engmaschigen Filtermantel (**5**) vom Innern der Filterpatrone (**4**) nach aussen zu fördern und somit einen verbesserten Durchspüleffekt zu erzielen.

16. Verfahren nach einem der Ansprüche 12 bis 15, **dadurch gekennzeichnet**, dass das Waschprogramm mit unterschiedlichen Reinigungsflüssigkeiten und Waschzusätzen betrieben wird.

17. Verfahren nach einem der Ansprüche 12 bis 16, da**durch gekennzeichnet**, dass bei einer Mehrzahl von Filterpatronen (**4**), mit den jeweils zugehörigen Betriebssystemen für die Nassreinigung in einem Prozessaggregat das Waschprogramm für alle Filterpatronen (**4**) aufeinander abgestimmt wird.

## Claims

1. A device for wet cleaning of filter cartridges (4) of remaining adhesive particles in process units, i.e. fluidised bed apparatus, spray-dryers, fluidised bed plants and hybrid units combined therefrom, by treatment with cleaning fluid, wherein
a) the cleaning fluid can be sprayed from a ring of nozzle openings (10) which is arranged inside the process unit and adapted to the cross-sectional geometry of the filter cartridge (4) on the filter housing (5) of the filter cartridge (4) and
b) a process unit has a reaction chamber (2) with a reaction-chamber head (3), and a waste-gas chamber (7) is provided above the said reaction-chamber head and
c) the waste-gas chamber (7) connects the reaction chamber (2) to a gas outlet (9) and
d) there are adjustment members for controlling the flows of material,
**characterised in that,**
e) the filter cartridge (4) is suspended on the drill pipe (19) of a lifting mechanism (17) in such a manner that the filter cartridge (4) can be moved up and down from a bottom position to a top position, i.e. between the reaction-chamber head (3) and the waste-gas chamber (7) and
f) the filter cartridge (4) in the bottom position hermetically seals the reaction-chamber head (3) in relation to the waste-gas chamber (7) via a sealing point (6) and consequently
g) gas from the reaction chamber (2) can only move through the filter housing (5) into the waste-gas chamber (7) and
h) nozzle openings (10) are provided in the waste-gas chamber (7), and the cleaning fluid can be sprayed therethrough to the filter housing (5) during the upward and downward movement of the filter cartridge (4) and
i) a bottom valve (18) is arranged in the filter cartridge (4), and the cleaning fluid can be discharged via the said valve.

2. A device according to Claim 1, **characterised in that** the ring of nozzle openings (10) is formed
a) by bores allowing flow and directed centrically to the filter cartridge (4) or as a radially extending nozzle gap or
b) from a number of nozzle openings (10), preferably slot nozzles (24) which are directed at an angle of inclination (α) to the filter housing (5) so that the cleaning jets spraying out strike the filter housing (5) at an angle of inclination (α) in a tangential manner, exert an angular momentum on the filter cartridge (4) and can start a rotatably suspended filter cartridge (4) rotating.

3. A device according to Claim 1, **characterised in that**
a) the sealing point (6) in the passage from the reaction-chamber head (3) to the waste-gas chamber (7) is formed from a lip seal (15) arranged on the upper edge of the filter cartridge (4) and a half circle (16) arranged in a wall (8) of the housing (1) of the process unit and turned towards the filter cartridge (4), wherein
b) the lip seal (15) in the bottom position of the filter cartridge (4) attaches to the half circle (16) so as to form a seal.

4. A device according to Claim 1, **characterised in that** actuation, i.e. opening and closing, of the bottom valve (18) is linked to the upward and downward movement of the filter cartridge (4) performed by the lifting mechanism (17).

5. A device according to Claim 1, **characterised in that**
a) a carrier shoulder (22) thickening the drill pipe (19) is provided on the drill pipe (19) which passes through a bush (21) mounted on the filter cartridge (4), below this bush (21), depending on the stroke of the bottom valve (18), and consequently
b) when the drill pipe (19) is moved upward, first of all the bottom valve (18) is opened and from the stop of the carrier shoulder (22) on the bush (21), the filter cartridge (4) is raised.

6. A device according to Claims 1 and 3, **characterised in that** pressure acting downwardly on the bottom valve (18) is exerted by means of the lifting mechanism (17) via the drill pipe (19) to achieve securely closing pressing of the bottom valve (18) on the seat in the filter cartridge (4) and the lip seal (15) on the half circle (16) during the production stage and the flushing process.

7. A device according to Claim 2, **characterised in that** the rotatable suspension of the filter cartridge (4) is provided on the drill pipe (19) of the lifting mechanism (17), preferably in the region of the carrier shoulder (22) by means of a mounting (23).

8. A device according to Claim 1, **characterised in that** a sluicing nozzle (20) for flushing the waste-gas chamber (7) and for rapid filling of the filter cartridge (4) with cleaning fluid respectively is arranged in the head of the waste-gas chamber (7).

9. A device according to Claim 1, **characterised in that** there is a shut-off valve (27) in the gas outlet (9) leaving the waste-gas chamber (7), and it is provided for sealing during compressed gas pressurisation.

10. A device according to Claim 1, **characterised in that** an ultrasound transmitter (26) is in, on or in the effective vicinity of the filter cartridge (4).

11. A device according to any one of Claims 1 to 10, **characterised in that** there is an appropriately large number of operating systems of the wet cleaning device in a process unit with several filter cartridges (4), including the associated supply and discharge pipes for the flows of material.

12. A process for wet cleaning of the filter cartridges (4) by using the device according to any one of Claims 1 to 11, **characterised in that**
a) during a washing stage by actuating the lifting mechanism (17) the emptied filter cartridge (4) using the entire surface of the filter housing (5) performs one or several upward or downward movements, from the bottom position to the top position and vice versa, through the ring of nozzle openings (10) which is outside the reaction chamber (2) and in the waste-gas chamber (7) of the process unit and
b) the nozzle openings (10) are simultaneously activated, thus causing the filter housing (5) to be treated by the cleaning jets striking thereon and
c) if the nozzle openings (10) are arranged in the angle of inclination (α) and the filter cartridge (4) is rotatably suspended, then the filter cartridge (4) is started rotating as a result of the cleaning jets striking the filter housing (5) in a tangential manner with the angle of inclination (α) and
d) the filter cartridge (4) can also be acted upon with pressure impulses.

13. A process according to Claim 12, **characterised in that**
a) before the washing stage, starting with flushing, the filter cartridge (4) is flooded by the feeding of cleaning fluid via the sluicing nozzle (20) and/ or the nozzle openings (10), wherein the filter cartridge (4) filled with cleaning fluid can also be acted upon with ultrasound and/or pressure impulses, thus causing flushing through of parts of the fluidised bed apparatus and of the filter housing (5) from the inside to the outside of the filter cartridge (4);
b) after the washing stage, during a subsequent light-duty washing stage, flushing and the course of the washing stage with frequently-used, recirculated cleaning fluid are repeated and
c) post-treatment finally follows, comprising flushing and washing with demineralised water for particularly high cleanliness requirements, blowing out the nozzle openings (10) and the sluicing nozzle (20) using compressed air, and drying the inside of the whole apparatus.

14. A process according to Claim 12, **characterised in that** remaining internal areas of the fluidised bed apparatus are washed during the washing stage after the first upward stroke of the filter cartridge (4).

15. A process according to Claim 12 or 13, **characterised in that** the pressure impulses on the filter cartridges (4) are produced using adjustable gas pressure to advance the cleaning fluid through the close-meshed filter housing (5) from the inside of the filter cartridge (4) to the outside, and consequently to achieve improved flushing action.

16. A process according to any one of Claims 12 to 15, **characterised in that** the washing programme is operated with a range of cleaning fluids and washing additives.

17. A process according to any one of Claims 12 to 16, **characterised in that** in the case of a plurality of filter cartridges (4), with the associated operating systems in each case for wet cleaning in a process unit the washing programme for all filter cartridges (4) is harmonised with each other.

## Revendications

1. Dispositif de nettoyage par voie humide destiné à débarrasser des cartouches filtrantes (4) de particules restées accrochées sur celles-ci dans des installations de traitement, à savoir, dans des appareils à couches fluidisées, pulvérisateurs-sécheurs, installations à lit fluidisé, et ensembles hybrides combinés à partir de ceux-ci, grâce à un traitement à l'aide d'un liquide de nettoyage, où
a) le liquide de nettoyage peut être projeté sur l'enveloppe filtrante (5) de la cartouche filtrante (4) à partir d'une couronne d'orifices gicleurs (10) placée à l'intérieur de l'installation de traitement et adaptée à la géométrie de section de la cartouche filtrante (4), et
b) une installation de traitement comporte une chambre de réaction (2) munie d'une tête (3) de chambre de réaction, une chambre (7) des gaz d'échappement étant prévue au-dessus de celle-ci, et
c) la chambre (7) des gaz d'échappement relie la chambre de réaction (2) à un échappement (9) des gaz, et où
d) des organes de réglage sont prévus pour la commande des flux de matière,
caractérisé en ce que
e) la cartouche filtrante (4) est suspendue par la timonerie (19) d'un dispositif de levage (17) de manière que la cartouche filtrante (4) puisse être déplacée en montée et descente entre une position extrême inférieure et une position extrême supérieure, à savoir, entre la tête (3) de la chambre de réaction et la chambre (7) des gaz d'échappement, et que
f) la cartouche filtrante (4), lorsqu'elle se trouve dans sa position extrême inférieure, isole la tête (3) de la chambre de réaction hermétiquement de la chambre (7) des gaz d'échappement, via un joint d'étanchéité (6), et que, de cette manière,
g) les gaz provenant de la chambre de réaction (2) ne puissent atteindre la chambre (7) des gaz d'échappement qu'à travers l'enveloppe filtrante (5), et en ce que
h) des orifices gicleurs (10) sont prévus dans la chambre (7) des gaz d'échappement, à travers lesquels le liquide de nettoyage peut être projeté sur l'enveloppe filtrante (5) pendant le mouvement ascendant et descendant de la cartouche filtrante (4), et que
i) une soupape de fond (18) est disposée dans la cartouche filtrante (4), via laquelle du liquide de nettoyage peut être évacué.

2. Dispositif selon la revendication 1, caractérisé en ce que la couronne d'orifices gicleurs (10) est constituée par
a) des perçages de passage dirigés sur le centre de la cartouche filtrante (4), ou par une fente de buse s'étendant dans le sens radial, ou par
b) une multitude d'orifices gicleurs (10), de préférence des gicleurs à jet plat (24), qui sont dirigés sur l'enveloppe filtrante (5) sous un angle d'inclinaison (α), de manière que les jets de nettoyage, qui en sont projetés, arrivent sur l'enveloppe filtrante (5) tangentiellement sous un angle d'inclinaison (α), exercent sur la cartouche filtrante (4) une impulsion de rotation et peuvent mettre en rotation une cartouche filtrante (4) suspendue de manière à pouvoir tourner.

3. Dispositif selon la revendication 1, caractérisé en ce que
a) le joint d'étanchéité (6) dans la partie de transition entre la tête (3) de la chambre de réaction et la chambre (7) des gaz d'échappement est constitué par un joint à lèvre (15) disposé sur le bord supérieur de la cartouche filtrante (4) et par un arrondi en demi-cercle (16) aménagé dans une paroi (8) du carter (1) de l'installation de traitement et tourné vers la cartouche filtrante (4),
b) le joint à lèvre (15) s'appuyant de façon étanche sur l'arrondi en demi-cercle (16) lorsque la cartouche filtrante (4) se trouve dans sa position extrême inférieure.

4. Dispositif selon la revendication 1, caractérisé en ce que l'actionnement - l'ouverture et la fermeture - de la soupape de fond (18) est couplé aux déplacements ascendants et descendants de la cartouche filtrante (4), effectués au moyen du dispositif de levage (17).

5. Dispositif selon la revendication 1, caractérisé en ce que
a) un talon d'entraînement (22) formant un élargissement de la timonerie (19) est prévu sur la timonerie (19) qui traverse une douille (21) installée sur la cartouche filtrante (4), le talon étant placé en dessous de cette douille (21), selon la course de la soupape de fond (18), et que, de ce fait,
b) lorsque la timonerie (19) effectue une ascension, elle ouvre d'abord la soupape de fond (18) et soulève ensuite la cartouche filtrante (4), dès que le talon d'entraînement (22) vient en appui sur la douille (21).

6. Dispositif selon les revendications 1 et 3, caractérisé en ce qu'une force de pression agissant vers le bas, sur la soupape de fond (18), est exercée à l'aide du dispositif de levage (17), par l'intermédiaire de la timonerie (19), afin d'assurer un appui garantissant une fermeture fiable de la soupape de fond (18) sur le siège ménagé dans la cartouche filtrante (4) et du joint à lèvre (15) sur l'arrondi en demi-cercle (16), pendant les phases de production et de rinçage.

7. Dispositif selon la revendication 2, caractérisé en ce que la suspension rotative de la cartouche filtrante (4) sur la timonerie (19) du dispositif de levage (17) est prévue de préférence au niveau du talon d'entraînement (22), par l'intermédiaire d'un palier (23).

8. Dispositif selon la revendication 1, caractérisé en ce qu'un gicleur de rinçage (20), assurant le rinçage de la chambre (7) des gaz d'échappement ainsi que le remplissage rapide de la cartouche filtrante (4) en liquide de nettoyage, est prévu dans la tête de la chambre (7) des gaz d'échappement.

9. Dispositif selon la revendication 1, caractérisé en ce qu'un clapet d'arrêt (27) se situe dans le conduit d'échappement (9) des gaz partant de la chambre (7) des gaz d'échappement, ce clapet étant prévu pour effectuer la fermeture pendant une injection de gaz sous pression.

10. Dispositif selon la revendication 1, caractérisé en ce qu'un générateur d'ultrasons (26) se situe dans la cartouche filtrante (4), sur la cartouche, ou à proximité d'action de celle-ci.

11. Dispositif selon l'une des revendications 1 à 10, caractérisé en ce que, dans une installation de traitement comportant plusieurs cartouches filtrantes (4), les systèmes de fonctionnement du dispositif de nettoyage par voie humide sont prévus en conséquence en plusieurs exemplaires, y compris les conduites associées pour l'acheminement et l'évacuation des flux de matière.

12. Procédé de nettoyage par voie humide pour cartouches filtrantes (4), utilisant le dispositif selon l'une des revendications 1 à 11, caractérisé en ce que
a) pendant une phase de lavage, la cartouche filtrante (4) vidée avec toute la surface de l'enveloppe filtrante (5), est amenée, grâce à l'actionnement du dispositif de levage (17), à effectuer un ou plusieurs mouvement(s) ascendant(s) et descendant(s) de la position extrême inférieure jusqu'à la position extrême supérieure, et vice versa, en traversant la couronne d'orifices gicleurs (10) située à l'extérieur de la chambre de réaction (2), dans la chambre (7) des gaz d'échappement de l'installation de traitement, et que
b) en même temps les orifices gicleurs (10) sont activés, de manière que l'enveloppe filtrante (5) soit traitée par les jets de nettoyage qui la frappent, et que
c) si les orifices gicleurs (10) sont orientés selon un angle d'inclinaison (α) et si la cartouche filtrante (4) est suspendue de façon libre en rotation, la cartouche filtrante (4) est mise en rotation par les jets de nettoyage frappant l'enveloppe filtrante (5) tangentiellement sous l'angle d'inclinaison (α), et en ce que
d) la cartouche filtrante (4) peut en outre être soumise à des impulsions de pression.

13. Procédé selon la revendication 12, caractérisé en ce que
a) avant la phase de lavage, en commençant par une opération de rinçage, la cartouche filtrante (4) est noyée grâce à l'introduction de fluide de nettoyage à travers le gicleur de rinçage (20) et/ou les orifices gicleurs (10), la cartouche filtrante (4) remplie de liquide de nettoyage pouvant en outre être soumise à des impulsions d'ultrasons et/ou de pression, de manière à produire un rinçage de parties de l'appareil à couches fluidisées et de l'enveloppe filtrante (5) de l'intérieur de la cartouche filtrante (4) vers l'extérieur; et que
b) après la phase de lavage, au cours d'une phase suivante de nettoyage fin, l'opération de rinçage et le déroulement de la phase de lavage sont répétés en réutilisant plusieurs fois le liquide de nettoyage mis en circulation fermée; et en ce que
c) finalement, un post-traitement est effectué, consistant en une opération de rinçage et de lavage à l'aide d'eau déminéralisée, répondant à des exigences de propreté particulièrement élevées, en un soufflage des orifices gicleurs (10) et du gicleur de rinçage (20) à l'air comprimé, et en un séchage de tout l'intérieur de l'appareil.

14. Procédé selon la revendication 12, caractérisé en ce que, pendant la phase de lavage, après la première course ascendante de la cartouche filtrante (4), on procède au lavage d'autres zones intérieures de l'appareil à couches fluidisées.

15. Procédé selon la revendication 12 ou 13, caractérisé en ce que les impulsions de pression exercées sur la cartouche filtrante (4) sont créées au moyen d'une pression réglable d'un gaz, de manière à favoriser le passage du liquide de nettoyage à travers l'enveloppe filtrante (5) à mailles serrées, de l'intérieur de la cartouche filtrante (4) vers l'extérieur, et à obtenir ainsi un effet amélioré de rinçage.

16. Procédé selon l'une des revendications 12 à 15, caractérisé en ce que le programme de lavage est exécuté en utilisant différents liquides de nettoyage et différents additifs de lavage.

17. Procédé selon l'une des revendications 12 à 16, caractérisé en ce que, dans le cas d'une multitude de cartouches filtrantes (4), avec les systèmes de fonctionnement associés pour le nettoyage par voie humide dans une installation de traitement, les programmes de lavage de toutes les cartouches filtrantes (4) sont coordonnés.
